# EUROPEAN PATENT SPECIFICATION

(11) **EP 0 903 525 B1**
(45) Date of publication and mention of the grant of the patent: **06.11.2002**
(21) Application number: 98114511.3
(22) Date of filing: 03.08.1998
(51) Int. Cl.: F16K 31/60, G05D 23/02

(54) **Control device for thermostatic valves**
Steuerungsvorrichtung für ein Thermostatventil
Dispositif de commande pour un robinet thermostatique

(30) Priority: 17.09.1997 IT MI972110
(43) Date of publication of application: 24.03.1999
(73) Proprietor: MACRIFIN S.p.A., 20121 Milano (IT)
(72) Inventor: Caleffi, Francesco, 28024 Gozzano (IT)
(74) Representative: Coloberti, Luigi

(56) References cited:
- EP-A- 0 694 722
- DE-A- 4 140 374
- DE-C- 4 318 816
- US-A- 4 290 553

## Description

### FIELD OF THE INVENTION

The present invention relates to thermostatic valves in general, and in particular to a selective control device for thermostatic valves of heating bodies or radiators for thermal heating systems, of the type mentioned in the preamble of claim 1.

### STATE OF THE ART

Thermostatic selective-control valves for heating bodies or radiators in heating systems are used and employed in a varying manner for controlling the flow of the thermal fluid in radiators, according to the desired ambient temperature which is sensed by a special thermostatic sensor, the action of which may be selectively set by operating a special device incorporated within a control knob.

Thermostatic selective-control devices for valves of the above mentioned kind are known for example from FR-A-2,458,019, EP-A-0,694,722 and DE-A-4,140,374.

In both the above mentioned documents, FR-A-2,458,019 and EP-A-0,694,722, adjustment of the throughput of the radiator valve, namely adjustment of the ambient temperature controlled by the thermostatic device, may be performed by manually operating on a part which is accessible at the front side, that is on the side of the knob which is closest to temperature control member of the thermostatic device.

Such an arrangement of the adjusting member, on the anterior or front end of the control knob, has some advantages and drawbacks both from the functional and structural point of view since the thermostatic control device not only does not ensure a position which is protected against any tampering or any incorrect operations by the user. DE-A-4,140,374 suggests to mount the control ring at the rear end of the control knob, but said control ring is difficult to incorporate in a harmonious manner in a control knob according to the above mentioned documents, while limiting the dimensions of the knob itself in keeping, with the present-day panel-type radiators, the overall dimensions of which tend to be increasingly smaller.

### OBJECTS OF THE INVENTION

The main object of the present invention is therefore to provide a selective control device for thermostatic valves of radiators and/or similar heating bodies, which has a compact structure and minimum dimensions and at the same time ensures a greater degree of protection against tampering and/or accidental incorrect operations.

A further object of the invention is to provide a selective control device as mentioned above, the element of which for adjusting rotation of the knob operating the thermostatic valve is suitably concealed while allowing manual setting or adjustment of the temperature to be controlled in an extremely easy and safe manner.

Yet another object of the present invention is to provide a thermostatic control device, as mentioned above, which not only has very small overall dimensions, but is such as to allow esthetically pleasing designs, while maintaining simplicity of operation and/or adjustment of the said thermostatic control device.

In general, the objects referred to above may be achieved by means of control device according to claim 1.

### BRIEF DESCRIPTION OF THE DRAWINGS

These and further features of the thermostatic control device according to the invention will emerge more clearly from the description which follows, with reference to the examples of the accompanying drawings, in which:
- Fig. 1 is a front view of the thermostatic control device;
- Fig. 2 is longitudinal sectional view, on a larger scale, through the thermostatic control device according to Figure 1;
- Fig. 3 is a cross-sectional view along the line 3-3 of Figure 2, showing a first operative condition;
- Fig. 4 is a cross-sectional view, similar to that of Figure 3, showing a second operative condition;
- Fig. 5 is a cross-sectional view, similar to that of preceding figures, showing a third operative condition;
- Fig. 6 is a cross-sectional view along the line 6-6 of Figure 2 in the closed condition;
- Fig. 7 is a cross-sectional view, similar to that of preceding figure, in the fully open condition;
- Fig. 8 is a longitudinal section through the control knob;
- Fig. 9 is a longitudinal sectional view through the control ring;
- Fig. 10 is a view of the central support body;
- Fig. 11 is a perspective view of the sensor housing cage;
- Fig. 12 is a view of the closing ring of the cage according to Figure 11;
- Figs. 13 and 14 are perspective views of the two parts which form a protective casing.

### DETAILED DESCRIPTION OF THE INVENTION

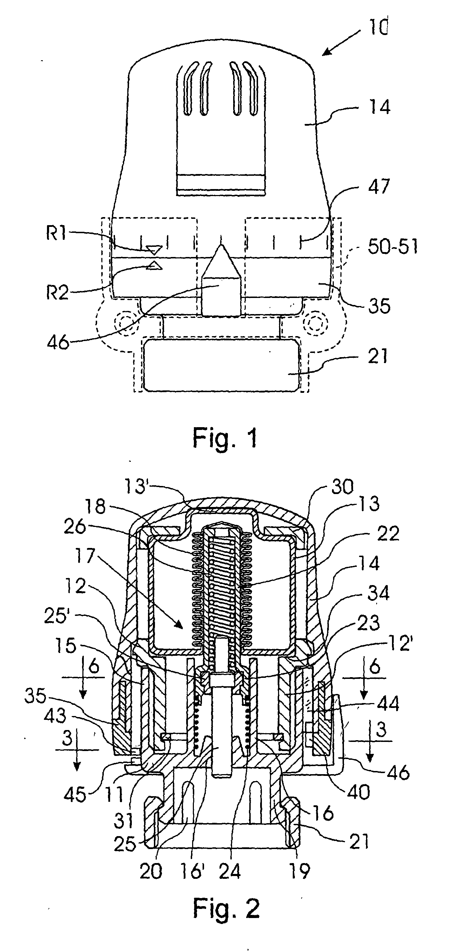

With reference to the various figures and in particular to Figure 2, we shall describe in detail the features and the general structure of the thermostatic control device according to the invention.

As shown, the thermostatic control device, denoted in its entirety by 10, comprises a central support body 11 for a housing cage 12 for a thermostatic control device of a valve, comprising a liquid-type thermostatic sensor 13, as well as for supporting a control knob 14.

The central support 11 has an internally threaded cylindrical wall inside which a threaded end part of the sensor support cage 12 is screwed.

The cylindrical wall 15 of the central support extends longitudinally towards the anterior or front side of the control knob 14, coaxially with an internal tubular wall 16 having an end hole 16' for guiding a thrust member 17 connected to the internal bellows 18 of the sensor 13.

On its rear side, in the opposite direction to the cylindrical wall 15, the central support 11 has a collar 19 which is resiliently yielding in the radial direction by means of some longitudinal slits 20 which allow insertion of a screwable ring 21 forming a member for fixing the thermostatic control device to the body of a valve (not shown) which regulates the flow of a thermal fluid in radiators of a heating system.

In particular, as shown in the cross-section according to Figure 2, the thrust member 17 consists of a tubular member 22 inserted inside the bellows 18 of the sensor 13, a sliding stem 25 and an extra-stroke spring 26 located inside the tube 22, and a stopping ring 25' which prevents the stem 25 from coming out. In particular the tube 22 terminates at its end outside the sensor in an enlarged part 23 longitudinally sliding inside the central guide 16, against the action of a thrust spring 24 supporting the said thrust member 17; the stem 25, which is intended to act against the valve closing member (not shown) with which the thermostatic control device is associated, slides telescopically inside the tube 22 against the action of a strong extra-stroke spring 26.

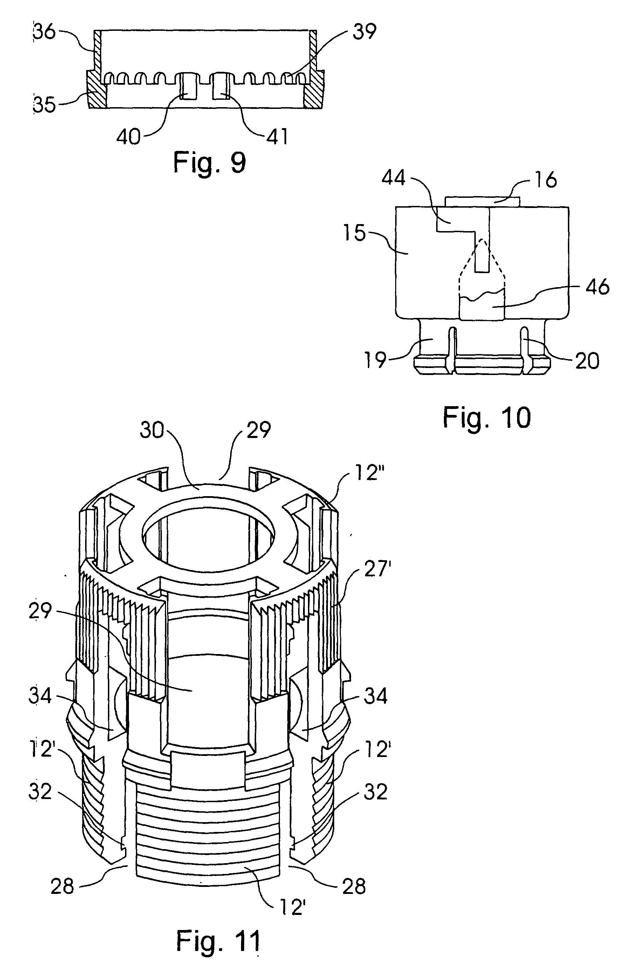

The construction of the sensor housing cage 12 is shown in the perspective view of Figure 11.

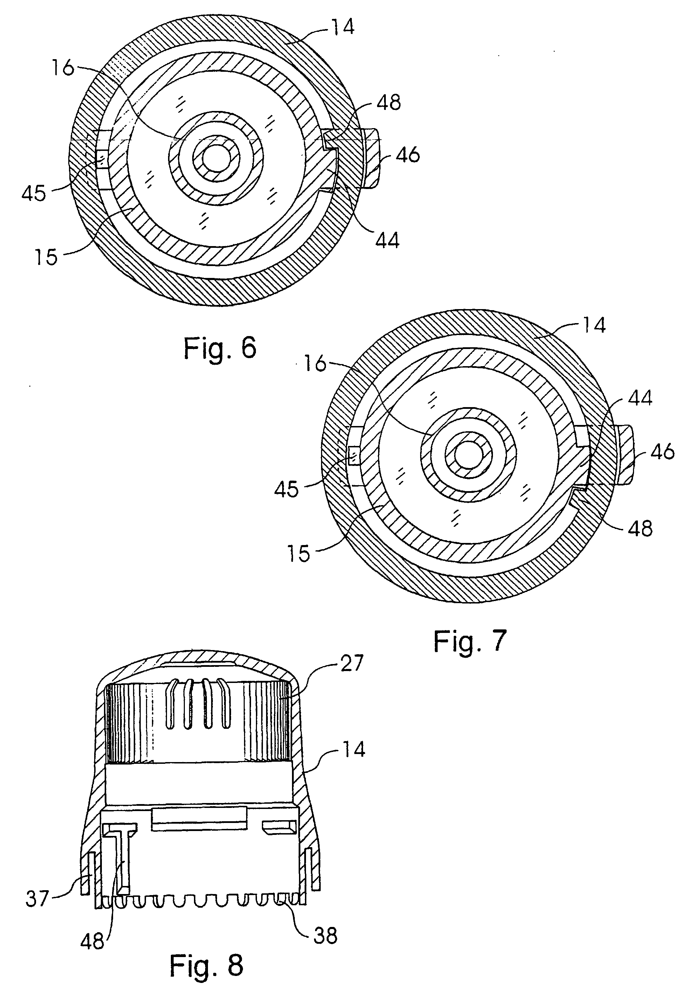

As can be seen from Figure 11, the cage 12 substantially comprises a smaller-diameter part provided with an external thread 12' for screwing into the cylindrical wall 15 of the central support; the cage 12 also comprises a larger-diameter part 12'' provided externally with longitudinal grooving 27' intended to engage with a similar internal grooving 27 at the front end of the control knob 14, as shown in Figure 8.

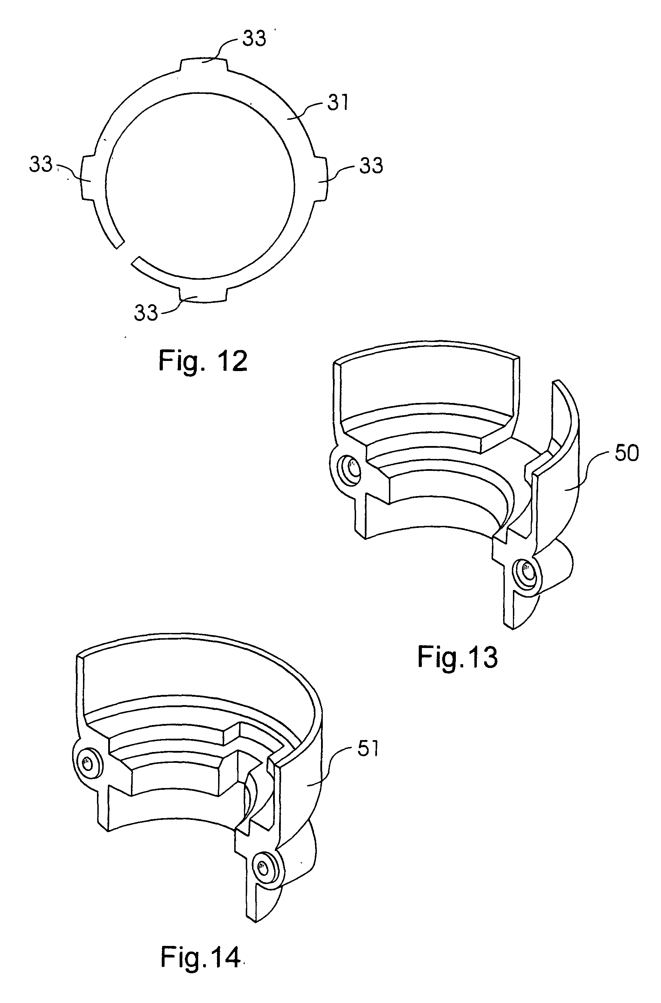

As can be seen from the perspective view of Figure 11, the cage 12 is resiliently expandable in the radial direction at the threaded end 12', owing to the presence of wide longitudinal openings 28 and 29 which are angularly spaced apart with respect to one another and which extend alternately in opposite directions towards the ends of the said cage 12 and owing to the presence of an annular cross-piece 30 at the end of the cage 12 opposite to the threaded end 12'; a split ring 31, shown in Figure 12, at the end 12' of the cage 12 allows partial constriction in a controlled manner. The ring 31 is resiliently yielding and fits into an annular recess 32 inside the threaded end of the cage 12; the ring 31 has radial lugs 33 (Figure 12) which are inserted between the edges of the openings 28, thus preventing constriction of the threaded end 12' of the sensor support cage, beyond a predetermined limit; this thus allows a certain degree of constant friction between the threads of the cage 12 and the central support 11 which ensures that the set position is maintained.

The use of the open cage 12 allows easy insertion of the sensor 13 and locking thereof in position between the annular cross-piece 30 and an internal stoppage shoulder 34, owing to the possibility of the said cage 12 to give way and expand resiliently in the threaded part 12', so as to allow the sensor to pass through. Moreover the sensor 13 with its dome-shaped end part 13' is able to protrude partially through the annular cross-piece 30, thus helping reduce the lengthwise dimensions of the entire control device.

As previously mentioned, a feature of the thermostatic control device according to the invention lies in the possibility of setting the ambient temperature by selectively adjusting the knob position of the device according to the invention which operates a valve normally associated with a radiator, keeping it constantly equal to the preset value.

In this connection, the selective angular rotation of the control knob within a temperature range predefined by the installation technician or the user, or the locking of rotation of the knob at a desired temperature value, may be performed by operating a control ring 35 as explained further below, with reference to the remaining figures.

As shown, the control ring 35 is supported in a rotatable and axially slidable manner by the knob 14 along its rear edge which extends longitudinally with respect to the cylindrical wall 15 of the central support, on the side which is opposite to that of the thermostatic sensor 13 which senses the ambient temperature.

More precisely the control ring 35 has a cylindrical wall 36 (Figure 9) intended to penetrate, with the possibility of rotation and axially sliding, into an annular recess 37 (Figure 8) formed along the rear edge of the knob 14. The rear edge of the knob 14 is extended internally with a circular toothing 38 which has suitably rounded teeth and is intended to engage selectively in a plurality of angular positions with a corresponding circular toothing 39 (Figure 9) formed inside the control ring 35.

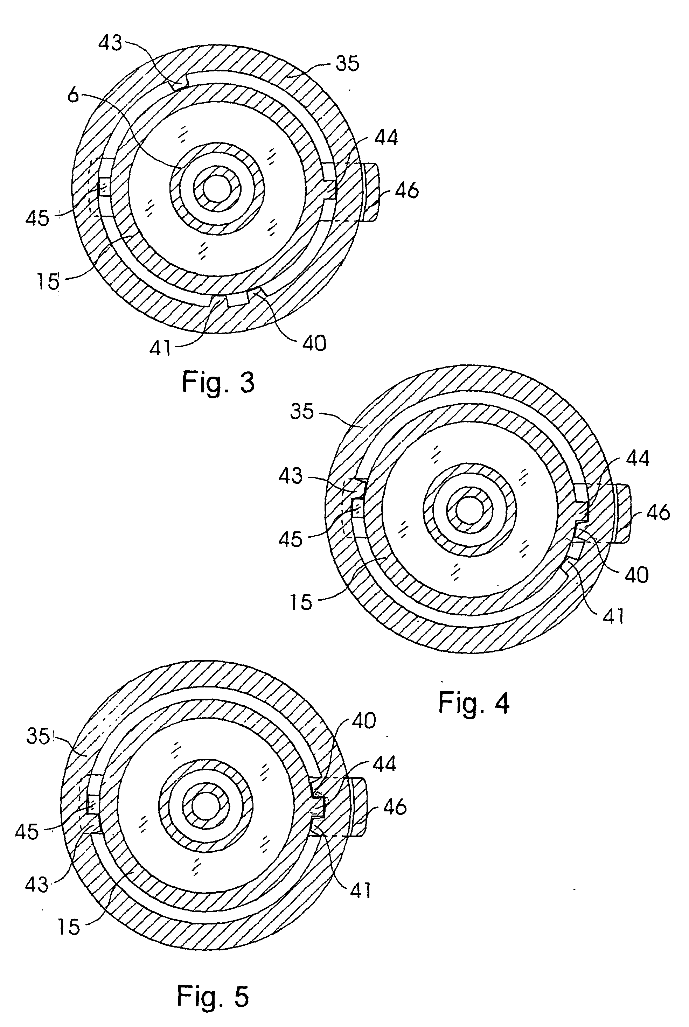

The control ring 35 has internally a pair of teeth 40, 41 which are angularly spaced and designed to fix or define the angle of rotation of the knob 14, as explained further below; the ring 35 also has a third tooth 43 (Figure 3) diametrically opposite to the tooth 40, for angular positioning of the ring itself.

The central support 11 in turn comprises a first L-shaped projection 44 (Figure 10) as well as a second projection 45 diametrically opposite to the longitudinal arm of the L-shaped projection 44.

Finally the knob 14 has in turn an internal rib 48 which extends longitudinally, as far as the toothed edge 38, on a side of the annular recess 37 for rotation of the control ring 35.

Operation of the thermostatic control device according to the invention will now be described briefly with reference to Figures 1 to 7 of the accompanying drawings.

### Preliminary setting

The thermostatic control device may be designed to allow adjustment of the temperature between a value 0 (zero), corresponding to complete closure of the thermostatic valve, and any predefined value on a scale 47, up to a maximum value corresponding to the maximum throughput of the thermal fluid through the said thermostatic valve; the thermostatic control device may also be fixed at a predefined temperature value, preventing the control knob 14 from rotating and hence the adjustment thus effected from being changed.

### Initial condition

The initial condition of the device corresponds to that set by the manufacturer at the time of production; this condition is indicated by the alignment of two reference marks R1 and R2 reproduced on the knob 14 and on the control ring 35, respectively, as shown in Figure 1.

The alignment of R1 and R2 corresponds to the longitudinal alignment of the rib 48 on the knob and the tooth 41 of the ring 35.

In this condition the control knob 14 is able to perform a rotation over the entire adjustment range, between the value zero indicating that the valve is closed and the value indicating that the valve itself is fully open.

These two positions, i.e. the zero position and fully open position, are defined by the abutment of the rib 48 of the knob against the two sides of the wide part of the L-shaped projection on the central body 11 (see Figures 6 and 7).

### Setting of the adjustment range

Let us assume now that it is wished to set the control device so as to allow rotation of the knob 14 in a temperature range comprised between zero and a predefined value of the scale 47; the control ring 35 and the knob 14 are still engaged with each other in the initial condition.

For this purpose, the knob 14 must be rotated until the predefined value on the scale 47 is aligned with the reference marker 46 on the central support. In this condition the teeth 40 and 41 of the ring 35 are located in the position shown in Figure 3 which corresponds to the set temperature value.

At this point the ring 35 is disengaged from the knob 14, being displaced forwards until it comes up against the support of the marker 46, and then the ring is rotated in an anti-clockwise direction, as shown in Figure 3, until the tooth 43 comes into abutment against the projection 45 (Figure 4).

Once this condition has been reached, the teeth of the ring 35 and the knob 14 engage with each other again, thus completing the setting operation.

The two adjusted end positions of the set range, calibrated are defined by abutment of the rib 48 against one side of the projection 44 (zero condition - see Figure 6) as well as abutment of the tooth 40 against the other side of the projection 44 (maximum temperature setting - see Figure 4).

The control device thus adjusted is therefore able to allow thermostatic regulation to any point between zero and the temperature value set.

### Setting of a fixed value

As mentioned, it is possible to lock rotation of the control knob 14 at any value on the adjustment scale 47.

In order to do so, the knob 14 is rotated until the prechosen value on the scale 47 is brought opposite the reference marker 46; then the control ring 35 is disengaged, causing it to rotate in the opposite direction to the preceding direction, i.e. clockwise, so as to bring the tooth 43 into abutment against the projection 45; in this condition, shown in Figure 5, the two teeth 40, 41 of the control ring 35 are located on either side of the projection 44 of the central support. The control ring 35 may therefore be engaged again with the knob 14 which consequently will remain locked in the angular position assumed.

From the above description and illustrations in the accompanying drawings it is therefore obvious how it has been possible to provide a control device for thermostatic valves and the like, by means of which it is possible to perform selective adjustment of the temperature values to be controlled and correspondingly the throughputs of the thermostatic valve with which this device is associated, by means of an extremely simple structure which is able to ensure a high degree of protection against tampering or incorrect operations.

In fact the arrangement of the control ring 35 along the rear edge of the control knob 14, on the side which is furthest from the thermostatic element or temperature sensor 13, prevents the ring from being accidentally upset since it is positioned in a less accessible zone compared to arrangement thereof at the front, in the region of the sensor, in accordance with previously known solutions. Moreover the setting of the said control device may be performed in an extremely simple and rapid manner as described above.

The proposed solution also allows an esthetically pleasing configuration of the entire thermostatic control device since the control ring may form an extension of the said edge of the knob, as shown. This moreover allows the fitting of a protective or anti-tampering casing as schematically shown in broken lines in Figure 1 of the accompanying drawings.

This protective casing consists of two half-shells 50 and 51 (Figures 13 and 14) which are suitably shaped so as to match the external shape of the central support 11, the ring 35, the control knob 14 and the ring 21, respectively, with the use of special locking screws which are screwed into threaded holes of the two half-shells and require the use of a special tool which is not available to the normal user. In this way not only is it possible to prevent voluntary or fraudulent tampering with the calibration of the thermostatic control device thus provided, but also removal of the valve body device installed on the radiator.

## Claims

1. Control device for thermostatic valves, of the type comprising:
- a central support (11) provided with a member (21) for fixing to the valve body;
- a housing cage (12) for a thermostatic sensor (13);
- a control knob (14) which can be manually operated so as to rotate and be axially displaced together with the cage (12) housing the sensor (13);
said sensor (13) being located on the front side of the cage (12) which is opposite to that for screwing the cage (12) onto the central support (11);
- a bellows (26) connected to a valve closing member by a resiliently yielding thrust member (17) comprising a stem (25) which extends through a guide hole (16') of the central support (11);
and in which said knob (14) is provided with a control ring (35) for limiting the rotation of the knob itself;
- said control knob (14) and said control ring (35) having engageable and disengageable circumpherential teeth (38, 39) which can be selectively engaged and disengaged with each other in a plurality of angular positions of said control ring (35), **characterized in that**
- the control ring (35) is extending from the rear edge of the knob (14) and is axially slidable and rotatably mounted in an annular recess (37) on the rear edge of the knob (14) facing the central support (11);
- the central support (11), the control ring (35) and the control knob (14) comprising stop members which can be engaged and disengaged in predefined angular positions to selectively limit the rotation of the control knob (14), or to lock it to the central support (11), said stop member comprising
an up-down L-shaped first projection (44) on one side of the central support (11), having a longitudinal arm parallelly directed to the central axis of the same central support (11), and a second projection (45) on the side opposite to the first projection (44); and a rib (48) which extends longitudinally inside the knob (14), as far as the toothed edge (38), on a side of the annular recess (37) for rotation of the control ring (35);
- the control ring (35) in turn having angularly spaced internal teeth (40, 41) for an abutment or to engage with said first projection (44) of the central support (11); and
- a third tooth (43) on the side opposite to said internal teeth (40, 41) to form an abutment on both sides of said second projection (45), following a disengagement and rotation of said ring (35) with respect to the knob.

2. Control device according to Claim 1, **characterized in that** said housing cage (12) has angularly spaced longitudinal openings (28) which extend towards the end of the cage for introduction of the thermostatic sensor (13); and **in that** a resiliently yielding ring (31) is fitted into a corresponding seat (32) inside said end of the cage (12) so as to allow a controlled and radially limited resilient yielding.

3. Control device according to Claim 2, **characterized in that** the control ring (35) has radial lugs (31) arranged between the edges of the longitudinal openings (28) at said resiliently yielding end (12') of the cage (12), so as to limit the radial constriction thereof.

4. Control device according to Claim 2, **characterized in that** the cage (12), at the end opposite to that for insertion of the sensor (13), is provided with an annular cross-piece (30), and **in that** a part of the sensor (13) extends outside through said annular cross-piece (30).

## Patentansprüche

1. Steuervorrichtung für Thermostatventile, wobei die Vorrichtung von dem Typ ist, der umfaßt:
- einen mittigen Träger (11), der mit einem Element (21) für die Befestigung am Ventilkörper versehen ist;
- einen Gehäusekäfig (12) für einen Thermostatsensor (13);
- einen Steuerknopf (14), der manuell betätigt werden kann, um zusammen mit dem dem Sensor (13) aufnehmenden Käfig (12) gedreht und axial bewegt zu werden;
wobei sich der Sensor (13) an der Vorderseite des Käfigs (12) befindet, die jener gegenüberliegt, an der der Käfig (12) auf den mittigen Träger (11) geschraubt ist;
- einen Federbalg (26), der mit einem Ventilschließelement durch ein elastisch nachgiebiges Schubelement (17) verbunden ist und einen Stab (25) aufweist, der durch ein Führungsloch (16') des mittigen Trägers (11) verläuft;
und bei der der Knopf (14) mit einem Steuerring (35) für die Begrenzung der Drehung des Knopfes selbst versehen ist;
- wobei der Steuerknopf (14) und der Steuerring (35) ein- und ausrückbare Umfangszähne (38, 39) besitzen, die in mehreren Winkelpositionen des Steuerrings (35) wahlweise ein- und ausrücken können, **dadurch gekennzeichnet, daß**
- der Steuerring (35) sich von der Hinterkante des Knopfes (14) erstreckt und in einer ringförmigen Aussparung (37) an der Hinterkante des Knopfes (14), die dem mittigen Träger (11) zugewandt ist, axial gleitend und drehbar angebracht ist;
- der mittige Träger (11), der Steuerring (35) und der Steuerknopf (14) Anschlagelemente umfassen, die in im voraus definierten Winkelpositionen einrücken und ausrücken können, um die Drehung des Steuerknopfes (14) wahlweise zu begrenzen oder um ihn an dem mittigen Träger (11) zu verriegeln, wobei das Anschlagelement umfaßt:
einen ersten L-förmigen Aufwärts/Abwärts-Vorsprung (44) auf einer Seite des mittigen Trägers (11), der einen mittigen Arm besitzt, der parallel zu der Mittelachse des mittigen Trägers (11) orientiert ist, einen zweiten Vorsprung (45) auf der dem ersten Vorsprung (44) gegenüberliegenden Seite; und eine Rippe (48), die sich im Knopf (14) longitudinal so weit wie die gezahnte Kante (38) auf einer Seite der ringförmigen Aussparung (37) für die Drehung des Steuerrings (35) erstreckt;
- der Steuerring (35) seinerseits in Winkelrichtung beabstandete Innenzähne (40, 41) besitzt, mit denen er an dem ersten Vorsprung (45) des mittigen Trägers (11) anschlägt oder mit diesem in Eingriff gelangt; und
- einen dritten Zahn (43) auf der den inneren Zähnen (40, 41) gegenüberliegenden Seite, um nach einem Ausrücken und einer Drehung des Rings (35) in bezug auf den Knopf beiderseits des zweiten Vorsprungs (45) einen Anschlag zu bilden.

2. Steuervorrichtung nach Anspruch 1, **dadurch gekennzeichnet, daß** der Gehäusekäfig (12) in Winkelrichtung beabstandete longitudinale Öffnungen (28) besitzt, die sich zum Ende des Käfigs erstrecken, um den Thermostatsensor (13) einzuführen; und daß ein elastisch nachgiebiger Ring (38) in einen entsprechenden Sitz (32) in diesem Ende des Käfigs (12) eingesetzt ist, um eine gesteuerte und radial begrenzte elastische Nachgiebigkeit zu ermöglichen.

3. Steuervorrichtung nach Anspruch 2, **dadurch gekennzeichnet, daß** der Steuerring (35) radiale Ansätze (31) aufweist, die zwischen den Kanten der longitudinalen Öffnungen (28) an dem elastisch nachgiebigen Ende (12') des Käfigs (12) angeordnet sind, um dessen radiale Einschnürung zu begrenzen.

4. Steuervorrichtung nach Anspruch 2, **dadurch gekennzeichnet, daß** der Käfig (12) an demjenigen Ende, das jenem für die Einführung des Sensors (13) gegenüberliegt, mit einem ringförmigen Kreuzelement (30) versehen ist und daß sich ein Teil des Sensors (13) außerhalb durch das ringförmige Kreuzelement (30) erstreckt.

## Revendications

1. Dispositif de commande pour vanne thermostatique, du type comprenant :
- un support central (11) muni d'un élément (21) permettant la fixation au corps de la vanne ;
- une cage de logement (12) pour un capteur thermostatique (13) ;
- un bouton de commande (14) qui peut être actionné manuellement de façon à tourner et être déplacé axialement en même temps que la cage (12) où est logé le capteur (13) ;
ledit capteur (13) étant situé sur la face avant de la cage (12) qui est opposée à celle servant à visser la cage (12) sur le support central (11);
- un soufflet (26) relié à un élément de fermeture de vanne par un élément de poussée élastique de manière résiliente (17) comprenant une tige (25) qui s'étend à travers un trou de guidage (16') du support central (11) ;
et dans lequel ledit bouton (14) est muni d'une bague de commande (35) pour limiter la rotation du bouton ;
- ledit bouton de commande (14) et ladite bague de commande (35) ayant des dents circonférentielles (38, 39) qui peuvent être engrenées et désengrenées sélectivement les unes aux autres dans une pluralité de positions angulaires de ladite bague de commande (35), **caractérisé en ce que**
- la bague de commande (35) s'étend depuis le bord arrière du bouton (14) et peut coulisser axialement et est montée à rotation dans un évidement annulaire (37) sur le bord arrière du bouton (14) qui fait face au support central (11) ;
- le support central (11), la bague de commande (35) et le bouton de commande (14) comprenant des éléments d'arrêt qui peuvent être mis en prise et hors de prise dans des positions angulaires préalablement définies pour limiter sélectivement la rotation du bouton de commande (14), ou pour le bloquer sur le support central (11), ledit élément d'arrêt comprenant
une première protubérance en forme de L renversé (44) sur un côté du support central (11), ayant un bras longitudinal dirigé parallèlement à l'axe central du même support central (11), et une deuxième protubérance (45) sur le côté opposé à la première protubérance (44) ; et une nervure (48) qui s'étend longitudinalement à l'intérieur du bouton (14), jusqu'au bord denté (38), sur un côté de l'évidement annulaire (37) pour la rotation de la bague de commande (35) ;
- la bague de commande (35) ayant des dents internes angulairement espacées (40, 41) pour un appui ou pour se mettre en prise avec ladite première protubérance (44) du support central (11) ; et
- une troisième dent (43) sur le côté opposé auxdites dents internes (40, 41) pour former un appui de chaque côté de ladite deuxième protubérance (45), suite au dégagement et à la rotation de ladite bague (35) par rapport au bouton.

2. Dispositif de commande selon la revendication 1, **caractérisé en ce que** ladite cage de logement (12) comporte des ouvertures longitudinales angulairement espacées (28) qui s'étendent vers l'extrémité de la cage pour l'introduction du capteur thermostatique (13), et **en ce qu'**une bague élastique de manière résiliente (31) est logée dans un siège correspondant (32) à l'intérieur de ladite extrémité de la cage (12) afin de permettre une élasticité résiliente contrôlée et limitée radialement.

3. Dispositif de commande selon la revendication 2, **caractérisé en ce que** la bague de commande (35) a des oreilles radiales (31) agencées entre les bords des ouvertures longitudinales (28) au niveau de ladite extrémité élastique de manière résiliente (12') de la cage (12), afin de limiter le resserrement radial de celle-ci.

4. Dispositif de commande selon la revendication 2, **caractérisé en ce que** la cage (12), au niveau de l'extrémité opposée à celle servant à l'insertion du capteur (13), est munie d'une pièce en croix annulaire (30), et **en ce qu'**une partie du capteur (13) s'étend à l'extérieur, à travers ladite pièce en croix annulaire (30).
